# EUROPEAN PATENT APPLICATION

(11) **EP 3 454 276 A1**
(43) Date of publication of application: **13.03.2019**
(21) Application number: 18193162.7
(22) Date of filing: 07.09.2018
(51) Int. Cl.: G06Q 20/20, G07G 1/00, G06K 7/00, G06K 7/10

(54) **READING APPARATUS AND METHOD FOR READING INFORMATION FROM RFID TAG BY THE SAME**

(30) Priority: 08.09.2017 JP 2017173457
(71) Applicant: Toshiba Tec Kabushiki Kaisha, Shinagawa-ku Tokyo (JP)
(72) Inventor: Sakurai, Wataru, Tokyo, 141-8562 (JP)
(74) Representative: Hoffmann Eitle

(57) **Abstract**

A reading apparatus includes an antenna, provided under a placing surface on which a placing area is formed. The antenna is configured to radiate radio waves capable of communicating with an RFID tag attached to a commodity placed in the placing area on the placing surface. The apparatus includes a moving module configured to move the antenna in the placing area in parallel with the placing surface, a detector configured to detect a position of the antenna within the placing area, a change module configured to change an output of the antenna according to the position of the antenna detected by the detector, and a reading module configured to read information from the RFID tag via the antenna.

## Description

### CROSS-REFERENCE TO RELATED APPLICATION

This application is based upon and claims the benefit of priority from Japanese Patent Application No. 2017-173457, filed in September 8, 2017, the entire contents of which are incorporated herein by reference.

### FIELD

Embodiments described herein relate generally to a reading apparatus and a method for reading information from an RFID tag attached to a commodity.

### BACKGROUND

A commodity sales data processing apparatus reads information relating to a commodity from an RFID (Radio Frequency Identifier) tag attached to the commodity to perform a sales registration based on the information. A conventional reading apparatus and commodity sales data processing apparatus in which an antenna capable of communicating with the RFID tag is embedded under a surface of a table on which a commodity is placed has been proposed.

### SUMMARY OF THE INVENTION

One of the objects of the present invention is to improve prior art techniques and overcome at least some of the prior art problems as for instance above illustrated.

According to a first aspect of the present invention, it is provided a reading apparatus, comprising:
an antenna configured to radiate radio waves capable of communicating with an RFID tag attached to a commodity placed in a placing area on a placing surface, the antenna positioned under the placing surface on which the placing area is formed;
a mover configured to move the antenna within the placing area in parallel with the placing surface;
a detector configured to detect a position of the antenna within the placing area;
a controller configured to
   change an output of the antenna according to the position of the antenna detected by the detector; and
   read information from the RFID tag via the antenna.

Optionally, in the reading apparatus according to the first aspect of the invention, the controller is configured to decrease an output of the antenna as the antenna approaches a periphery of the placing area.

Optionally, in the reading apparatus according to the first aspect of the invention, the controller is configured to change the output of the antenna so that a communication range of radio waves radiated from the antenna falls within the placing area.

Optionally, in the reading apparatus according to the first aspect of the invention, the controller is configured to change the output of the antenna so that a communication range of radio waves radiated from the antenna falls within the placing area.

Optionally, in the reading apparatus according to the first aspect of the invention, the mover is configured to adjust a position of the antenna in a uniaxial direction parallel to the placing surface.

Optionally, in the reading apparatus according to the first aspect of the invention, the mover is configured to move the antenna in biaxial directions parallel to the placing surface.

Optionally, in the reading apparatus according to the first aspect of the invention, the controller is configured to change the output of the antenna so that at least part of a communication range of radio waves radiated from the antenna falls outside the placing area.

Optionally, in the reading apparatus according to the first aspect of the invention, the controller is configured to change the output of the antenna so that a majority of a communication range of radio waves radiated from the antenna falls outside the placing area.

According to a second aspect of the present invention, it is provided a method for reading information from an RFID tag attached to a commodity placed in a placing area by a reader having an antenna, the antenna being provided under a placing surface on which the placing area is formed and configured to radiate radio waves capable of communicating with the RFID tag, including:
moving the antenna within the placing area;
detecting a position of the antenna;
changing an output of the antenna according to the detected position of the antenna; and
reading information from the RFID tag via the antenna.

Optionally, the method according to the second aspect of the invention further comprises decreasing the output of the antenna as the antenna approaches a periphery of the placing area.

Optionally, the method according to the second aspect of the invention further comprises changing the output of the antenna so that a communication range of radio waves radiated from the antenna falls within the placing area.

Optionally, the method according to the second aspect of the invention further comprises changing the output of the antenna so that a communication range of radio waves radiated from the antenna falls within the placing area.

Optionally, the method according to the second aspect of the invention further comprises adjusting a position of the antenna in a uniaxial direction parallel to the placing surface.

Optionally, the method according to the second aspect of the invention further comprises moving the antenna in biaxial directions parallel to the placing surface.

Optionally, the method according to the second aspect of the invention further comprises changing the output of the antenna so that at least part of a communication range of radio waves radiated from the antenna falls outside the placing area.

Optionally, the method according to the second aspect of the invention further comprises changing the output of the antenna so that a majority of a communication range of radio waves radiated from the antenna falls outside the placing area.

### DESCRIPTION OF THE DRAWINGS

Fig. 1 is a perspective view illustrating an example of an external arrangement of a commodity sales data processing apparatus according to at least one embodiment;
Fig. 2 is a side view illustrating a schematic arrangement of a reading apparatus according to at least one embodiment;
Fig. 3 is a diagram illustrating an example of hardware configuration of a POS terminal and a reading apparatus according to at least one embodiment;
Fig. 4 is a diagram illustrating an example of functional components of a POS terminal and a reading apparatus;
Fig. 5 is a diagram illustrating a comparative example of an operation of a reader/writer controller according to at least one embodiment;
Fig. 6 is a diagram illustrating an operation of a reader/writer controller;
Fig. 7 is a flowchart depicting an example of a commodity sales data processing executed by a POS terminal and a reading apparatus; and
Fig. 8 is a plan view illustrating a schematic configuration of a reading apparatus according to at least one embodiment.

### DETAILED DESCRIPTION

When some reading apparatuses carry out a commodity sales registration, a commodity or a shopping basket containing the commodity may be placed on the table under which the antenna is embedded. However, there is a case in which an RFID tag cannot be read depending on a position of the commodity (RFID tag) on the surface of the table, or an overlapping state of the commodities. In such a case, a method of changing a positional relationship between the antenna and the RFID tag by moving the antenna is conceivable, but since a radiation range (communication range) of radio waves by the antenna also moves as the antenna moves, there is a possibility of reading an irrelevant RFID tag present in the vicinity of the reading apparatus.

In accordance with at least one embodiment, a reading apparatus comprises an antenna, provided under a placing surface on which a placing area is formed, configured to radiate radio waves capable of communicating with an RFID tag attached to the commodity placed in the placing area on the placing surface; a moving module configured to move the antenna in the placing area in parallel with the placing surface; a detection module configured to detect a position of the antenna within the placing area; a change module configured to change an output of the antenna according to the position of the antenna detected by the detection module; and a reading module configured to read information from the RFID tag via the antenna.

A reading apparatus according to at least one embodiment is described with reference to the accompanying drawings.

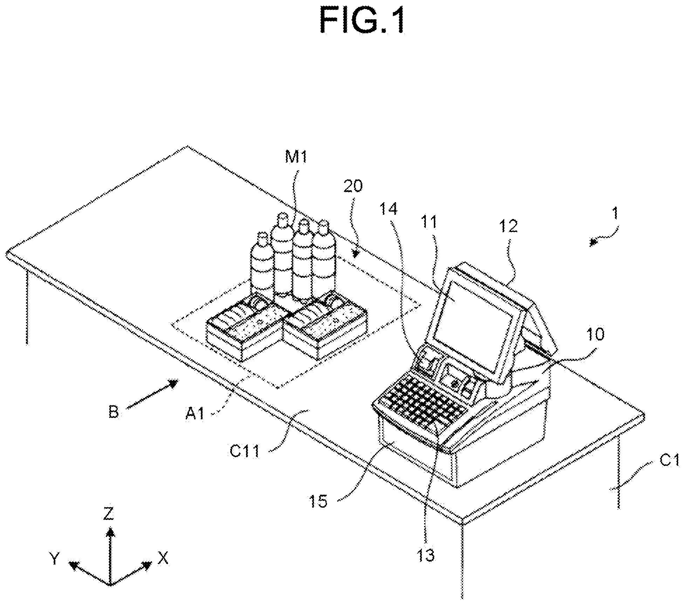

Fig. 1 is a diagram illustrating an external configuration of a commodity sales data processing apparatus 1. As shown in Fig. 1, the commodity sales data processing apparatus 1 includes a POS (Point Of Sales) terminal 10 and a reading apparatus 20.

The POS terminal 10 is installed on a top board C11 of a checkout counter C1. The checkout counter C1 is, for example, a long work table. The top board C11 of the checkout counter C1 is made of a material such as plastic, glass, wood and the like through which radio waves can penetrate.

The POS terminal 10 includes a first display device 11, a second display device 12, a keyboard 13, a printer 14, and a drawer 15.

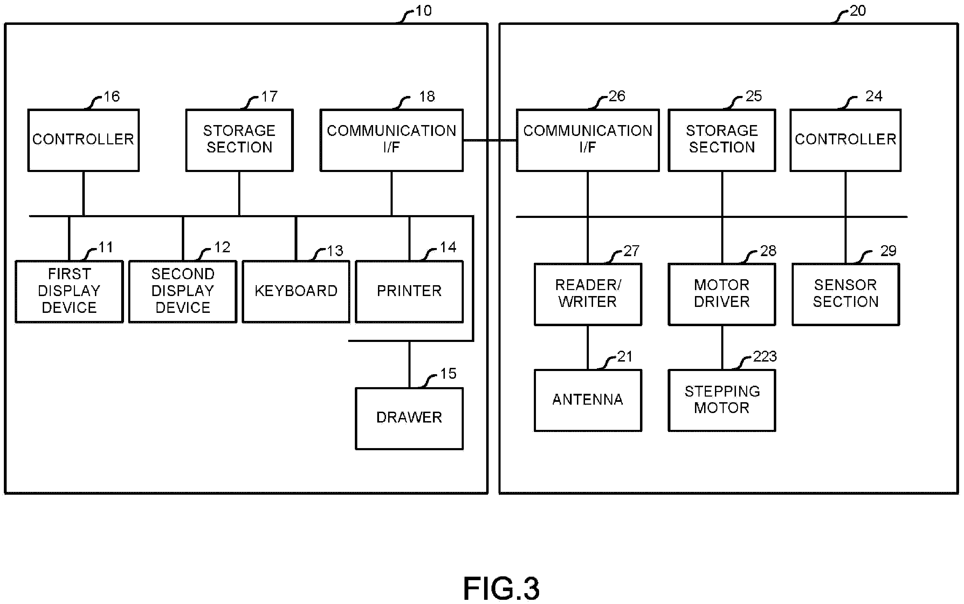

The first display device 11, i.e., a display device for a store clerk who operates the POS terminal 10, is attached above the keyboard 13. The second display device 12, i.e., a display device for customer, is installed to face the first display device 11 in a back-to-back manner. The first display device 11 and the second display device 12 display information relating to the commodity read by the reading apparatus 20 under the control of a controller 16 (refer to Fig. 3) described later. Each of the first display device 11 and the second display device 12 may be a touch panel display.

The keyboard 13, i.e., a user interface operated by an operator of the POS terminal 10, includes various operation keys . For example, the keyboard 13 includes a reading start key for instructing start of reading an RFID tag attached to a commodity M1, a reading termination key for instructing termination of the reading, and the like.

The printer 14 is a well-known printer device such as a thermal printer. Under the control of the controller 16 (refer to Fig. 3) described later, the printer 14 issues a receipt produced by printing contents of one sales-transaction on a predetermined paper. The drawer 15 is provided with an openable drawer-case in which cash, e.g., bills and coins, is stored.

On an upper surface of the top board C11 adjacent to the POS terminal 10, a placing area A1 is provided for putting an article to be read by the reading apparatus 20 therein. A commodity M1 as an article or a shopping basket containing the commodity M1 is placed in the placing area A1 if the settlement of the commodity M1 is performed. It is preferable that the placing area A1 is clearly visibly indicated on the upper surface of the top board C11.

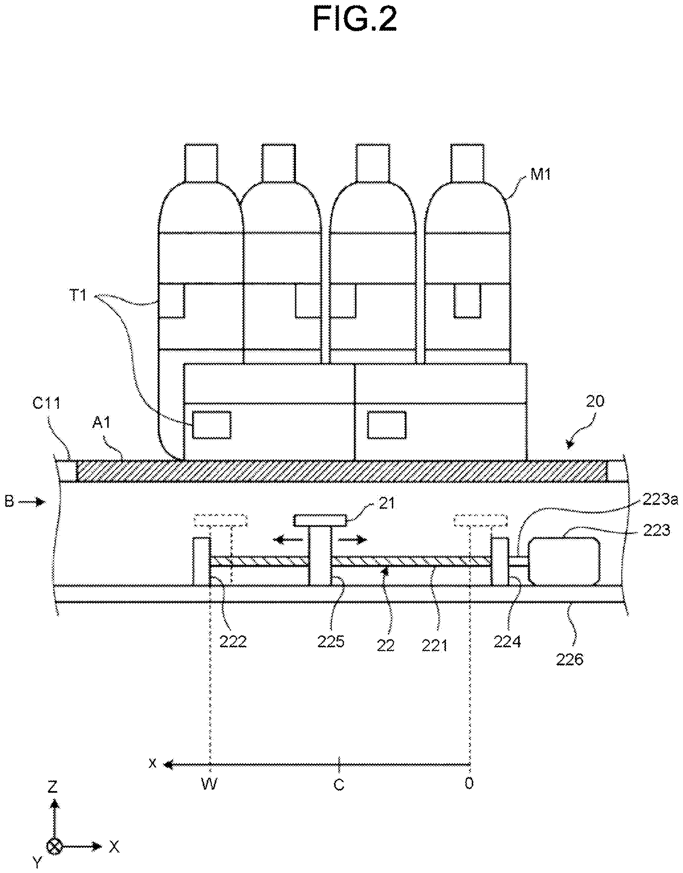

Next, an example arrangement of the reading apparatus 20 is described. Fig. 2 is a side view illustrating a schematic configuration of the reading apparatus 20. Fig. 2 illustrates the reading apparatus 20 viewed in a direction indicated by an arrow B in Fig. 1.

As shown in Fig. 2, the reading apparatus 20 includes an antenna 21 and a moving mechanism 22. The antenna 21 and the moving mechanism 22 are embedded under the placing area A1 (hatched area) of the top board C11.

The antenna 21 is, for example, a planar antenna to radiate radio waves capable of communicating with an RFID tag T1 attached to the commodity M1 under the control of a reader/writer 27 (refer to Fig. 3) described later.

The moving mechanism (mover or prime mover) 22 is an example of a moving module. The moving mechanism 22 moves the antenna 21 within the placing area A1 in parallel with the upper surface (placing surface of the placing area Al) of the top board C11. The presence of the antenna 21 within the placing area A1 indicates an inclusion relation between the antenna 21 and the placing area A1 if viewing the placing area A1 from the above (Z-axis direction).

The moving mechanism 22 includes a linear motion mechanism composed of, for example, a screw shaft 221, a bearing 222 of the screw shaft 221, a stepping motor 223, a coupling 224, and a moving base 225.

The stepping motor 223 is a rotational power source. The coupling 224 transmits a rotational power of the stepping motor 223 to the screw shaft 221. The moving base 225 is integrally combined with a ball screw nut engaged with the screw shaft 221.

One of the ends of the screw shaft 221 is horizontally supported by the bearing 222 while the other end thereof is horizontally supported by the coupling 224 in a freely axially rotatable manner. An output shaft 223a of the stepping motor 223 is connected to the other end of the screw shaft 221 via the coupling 224. With this arrangement, the rotational power of the stepping motor 223 is transmitted from the output shaft 223a to the screw shaft 221 via the coupling 224.

The moving base 225 has a through hole in a main body thereof, and the ball screw nut of the screw shaft 221 is inserted in the through hole. By engaging the ball screw nut with the screw shaft 221, the moving base 225 moves forward or backward along the screw shaft 221 together with the rotation of the screw shaft 221, i.e., moves in a direction indicated by arrows in Fig. 2. Due to a metal ball (e.g., a steel ball) interposed between the screw shaft 221 and the screw portion of the ball screw nut in the movement of the moving base 225, the moving base 225 can move smoothly. The moving base 225 moves in such a manner that a part thereof is in contact with a supporting plate 226 so as not to rotate as the screw shaft 221 rotates.

As described above, the moving mechanism 22 enables the movable base 225 to move in a uniaxial direction by converting a rotational motion of the stepping motor 223 to a linear motion by the above-described ball screw. The movable range of the moving base 225 is determined to keep the antenna 21 within the placing area A1. In Fig. 2, it is set, for example, that the moving base 225 is moveable within a range from a position of x = 0 to a position of x = W with a position of x = C as a middle point. It is further set, for example, that the screw shaft 221 may be arranged in parallel with a side of the placing area A1 in an X-axis direction thereof and at a position passing through the center of the placing area A1.

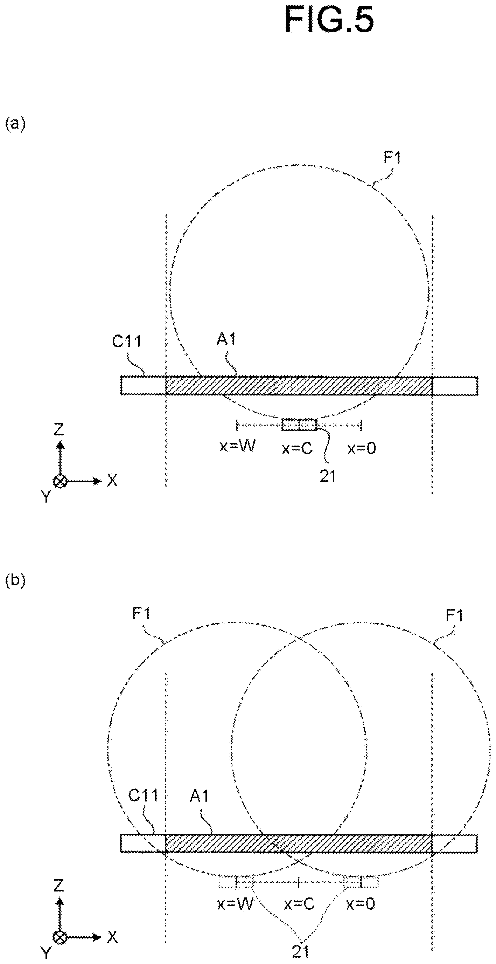

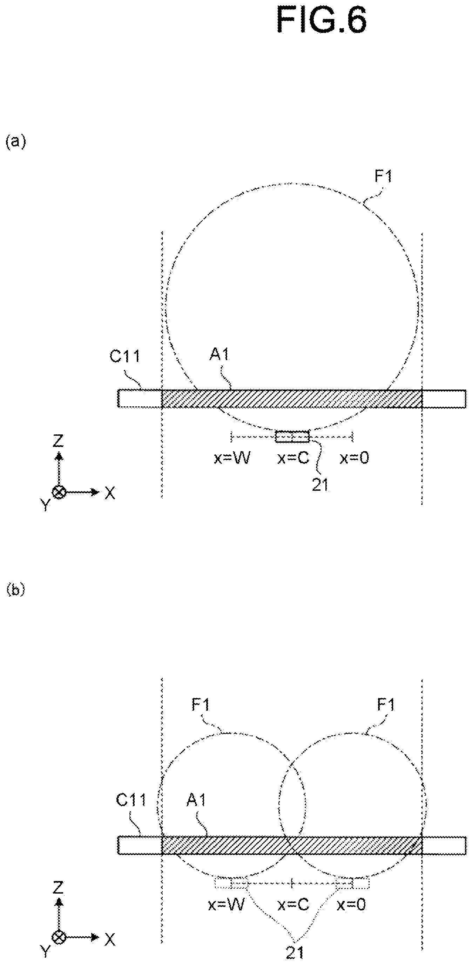

The antenna 21 of which a reading surface thereof faces the top board C11 (placing area A1) is fixed on the upper surface of the moving base 225. The reading surface refers to a radiation surface from which the antenna 21 radiates radio waves. As a result, the antenna 21 forms a radio wave communication range (refer to Fig. 5 and Fig. 6) in the placing area A1. Then, the antenna 21 moves with the moving base 225 as a single piece.

The reader/writer 27 (refer to Fig. 3) is connected to the antenna 21 via a bendable coaxial cable. A sensor section 29 (refer to Fig. 3) for detecting the position of the moving base 225 on the screw shaft 221 is provided on the screw shaft 221 and the moving base 225.

Next, a hardware configuration of the POS terminal 10 and the reading apparatus 20 is described. Fig. 3 is a diagram illustrating a hardware configuration of the POS terminal 10 and the reading apparatus 20.

The POS terminal 10 includes the controller 16 having a computer including a CPU (Central Processing Unit), a ROM (Read Only Memory), and a RAM (Random Access Memory). The CPU is a processor of the POS terminal 10. The ROM stores various programs to be executed by the CPU and various data. The RAM temporarily stores data and programs when the CPU executes various programs.

The first display device 11, the second display device 12, the keyboard 13, the printer 14, and the drawer 15 described above are connected to the controller 16 via various input and output circuits. A storage section 17 and a communication I/F (interface) 18 are connected to the controller 16 via various input and output circuits.

The storage section 17 includes a non-volatile storage medium such as an HDD (Hard Disk Drive) or an SSD (Solid State Drive). The storage section 17 stores various programs and various data relating to the operation of the POS terminal 10. The data stored by the storage section 17 includes, for example, a commodity master file for registering commodity information relating to each commodity in association with a commodity code for identifying the commodity. The commodity information includes, for example, a commodity name and a unit price. The communication I/F 18 is used for transmitting and receiving various data to and from the reading apparatus 20.

On the other hand, the reading apparatus 20 includes a controller 24 having a computer composed of a CPU, a ROM, and a RAM. The CPU is a processor of the reading apparatus 20. The ROM stores various programs to be executed by the CPU and various data. The RAM temporarily stores data and programs when the CPU executes various programs.

The controller 24 is connected with a storage section 25, a communication I/F 26, a reader/writer 27, a motor driver 28, and the sensor section 29 via various input and output circuits (not shown).

The storage section 25 includes a non-volatile storage medium such as an HDD or an SSD. The storage section 25 stores various programs and various data relating to operations by the reading apparatus 20. For example, the storage section 25 stores an operation pattern described later, setting information for defining a relationship between the position of the antenna and the antenna output, and the like. The communication I/F 26 is used for transmitting and receiving various data to and from the POS terminal 10.

The reader/writer 27 communicates with the RFID tag T1 via the antenna 21 under the control of the controller 24 to read tag information stored in the RFID tag T1. The tag information stored in the RFID tag T1 includes a commodity code of the commodity M1 to which the RFID tag T1 is attached, a unique tag identifier capable of identifying the RFID tag T1, and the like.

The motor driver 28 is used for operating the stepping motor 223. The motor driver 28 outputs a pulse signal for rotating the stepping motor 223 under the control of the controller 24.

The sensor section 29 is, for example, an encoder to sense or measure the position of the moving base 225 on which the antenna 21 is mounted on the screw shaft 221. The sensor section 29 outputs a sensing result to the controller 24.

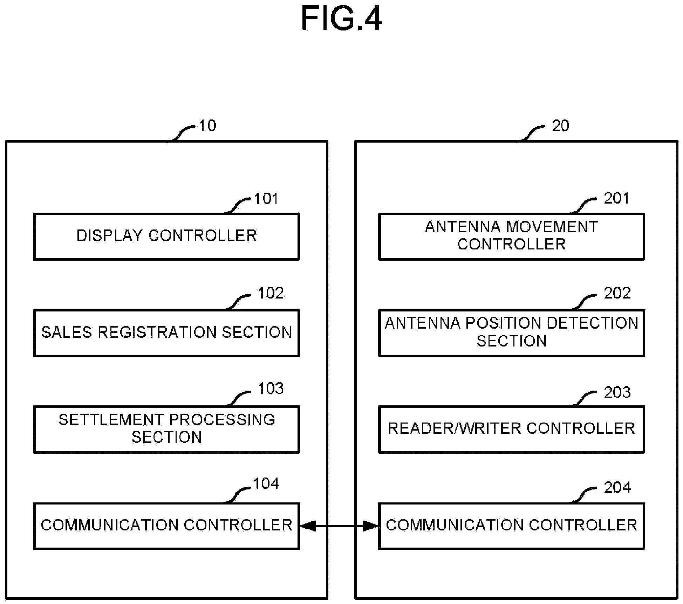

Next, functional components of the POS terminal 10 and the reading apparatus 20 are described. Fig. 4 is a diagram illustrating an example of the functional components of the POS terminal 10 and the reading apparatus 20.

The POS terminal 10 includes, as functional sections realized by the controller (CPU) 16 executing the programs stored in the storage section 17, a display controller 101, a sales registration section 102, a settlement processing section 103, and a communication controller 104.

The display controller 101 displays various screens on the first display device 11 and the second display device 12. For example, the display controller 101 displays a screen including an operator for instructing the start of reading the commodity M1 (RFID tag T1) and an operator for instructing termination of the reading. The display controller 101 cooperates with the sales registration section 102 and the settlement processing section 103 to display a commodity name and total amount of the commodity M1 on which the sales registration is performed on the first display device 11 and the second display device 12.

The sales registration section 102 executes a sales registration processing for registering the commodity M1 to be sold. Specifically, if the tag information is input from the reading apparatus 20, the sales registration section 102 specifies the commodity M1 corresponding to the commodity code included in the tag information from the commodity master file. The sales registration section 102 carries out a sales registration in which a sales quantity and an amount of the commodity are stored in the RAM in association with the commodity code of the specified commodity. The sales registration section 102 checks a cumulative or repetitive registration based on the tag identifier to prevent the commodity M1 with the same tag identifier from being registered repeatedly.

The settlement processing section 103 executes a settlement processing on the commodity M1 based on the data of the commodity M1 on which the sales registration is performed. Specifically, if an operation of termination of reading is received via the keyboard 13, the settlement processing section 103 executes the settlement processing for settling the total amount of commodities M1 on which the sales registration is performed with an amount of money (an amount of currency, e.g., a payment amount) paid by a customer. The settlement processing section 103 issues a receipt on which contents of the sales-transaction are printed through the printer 14.

The communication controller 104 performs transmission/reception of various information to and from the reading apparatus 20 via the communication I/F 18. For example, upon receiving the operation to start reading, the communication controller 104 transmits instruction information for instructing the reading start to the reading apparatus 20, on the one hand. The communication controller 104 receives the tag information transmitted from the reading apparatus 20, on the other hand. If receiving the operation to terminate the reading, the communication controller 104 transmits instruction information for instructing the reading termination to the reading apparatus 20.

On the other hand, the reading apparatus 20 includes, as functional sections realized by the controller (CPU) 24 executing programs stored in the storage section 25, an antenna movement controller 201, an antenna position detection section 202, a reader/writer controller 203, and a communication controller 204.

The antenna movement controller 201 cooperates with the motor driver 28 to control the movement of the moving base 225 on which the antenna 21 is mounted within the placing area A1. Specifically, if the start of reading is instructed, the antenna movement controller 201 drives the motor driver 28 to move the moving base 225 in a predetermined movement pattern.

The operation pattern of the moving base 225 is not particularly limited and can be arbitrarily set. For example, the movement pattern may be a pattern in which the moving base 225 is reciprocated from the position of x = 0 to the position of x = W, and then from the position of x = W to the position of x = 0, wherein x = 0 shown in Fig. 2 is set as a reference position. Also, the movement pattern may be a pattern in which the movement base 225 is moved between the position of x = 0 and the position of x = W with reference to x = C shown in Fig. 2 set as the reference position.

Further, the moving speed of the moving base 225 is not particularly limited, and may be arbitrarily set by combining with the moving pattern. For example, the moving base 225 may be moved at a predetermined constant speed. The moving speed of the moving base 225 may be changed according to the position of the antenna 21 detected by the antenna position detection section 202. For example, in a case in which the position of x = C is set as the movement reference position, by initially setting the moving speed of the moving base 225 to zero, the movement of the moving base 225 may be started after the moving base 225 stops at the reference position for a predetermined period of time.

The antenna position detection section 202 is an example of a detection module (detector). Based on the sensing result of the sensor section 29, the antenna position detection section 202 detects a position of the antenna 21 (hereinafter referred to as an antenna position) within the placing area A1.

The reader/writer controller 203 is an example of a change module and a reading module (a reader). The reader/writer controller 203 controls the operation of the antenna 21 by cooperating with the reader/writer 27. The reader/writer controller 203 reads the tag information from the RFID tag T1 via the antenna 21 and the reader/writer 27.

Specifically, if the start of reading is instructed, the reader/writer controller 203 operates the antenna 21 to start reading the RFID tag T1 attached to the commodity M1. If the tag information is read from the RFID tag T1, the reader/writer controller 203 transmits the tag information to the POS terminal 10. If the termination of reading is instructed, the reader/writer controller 203 controls the reader/writer 27 to stop the operation of the antenna 21, and thus the reading of the RFID tag T1 is terminated.

The reader/writer controller 203 changes an output of the antenna 21 (hereinafter referred to as an antenna output) in response to the antenna position detected by the antenna position detection section 202. The antenna output refers to intensity of radio waves radiated from the antenna 21, which corresponds to a size of the communication range in which the antenna can communicate with the RFID tag T.

Specifically, the reader/writer controller 203 decreases the antenna output as the antenna position approaches an edge or a periphery of the placing area A1. The operation by the reader/writer controller 203 is described below with reference to Fig. 5 and Fig. 6.

Fig. 5 shows a comparative example of the operation by the reader/writer controller 203, which schematically illustrates a state of the communication range if the antenna output from the antenna 21 is constant. Fig. 5 illustrates a state of the reading apparatus 20 if viewed from the direction indicated by the arrow B in Fig. 1, as similar to that in Fig. 2.

As shown in Fig. 5(a), a substantially spherical communication range F1 is formed in the placing area A1 by radio waves radiated from the radiation surface of the antenna 21. The communication range F1 refers to a range in which the antenna 21 can communicate with the RFID tag T1.

The size of the communication range F1, i.e., the antenna output from the antenna 21 is generally set based on the size of the placing area A1. For example, the communication range F1 is set to a size at which a majority of the placing area A1 can be covered with the antenna 21 positioned substantially at the center (x = C) of the placing area A1. As a result, it is possible to efficiently read the RFID tag T1 of the commodity M1 placed in the placing area A1.

In the reading apparatus 20, since the antenna 21 is moved within the placing area A1, the communication range F1 also moves within the placing area A1 as the antenna 21 is moved. By moving the antenna 21 within the placing area A1 in this way, the positional relationship between the antenna 21 and the RFID tag T1 changes, and radio waves can be radiated from the antenna in different directions. In this way, it can improve the probability of reading, for example, the RFID tag T1 that could not be read at the antenna position of x = C can be read at different positions of the antenna, and thus, reading of the RFID tag T1 can be efficiently performed.

In the meantime, in the reading apparatus 20 with such an arrangement described above, if the antenna 21 approaches the edge of the placing area A1, there is a possibility that the communication range F1 moves out of the placing area A1. For example, as shown in Fig. 5(b), if the moving base 225 moves to the position of x = 0 or x = W and the antenna 21 approaches the edge of the placing area A1, the communication range F1 moves to another area adjacent to the placing area A1. In this case, there is a likelihood that the antenna 21 communicates with an RFID tag T1 attached to the commodity M1 present beyond the placing area A1, leading to occurrence of misreading that a commodity code is erroneously read.

Therefore, the reader/writer controller 203 changes the antenna output of the antenna 21 based on the antenna position detected by the antenna position detection section 202 to perform control in such a manner that the antenna outputs at positions of x = 0 and x = W are smaller than the antenna output at a position of x = C.

Specifically, as shown in Fig. 6(a), if the antenna position is x = C, the reader/writer controller 203 sets a predetermined maximum antenna output to form the communication range F1 capable of covering most of the placing area A1. As shown in Fig. 6(b), if the moving base 225 moves to the position of x = 0 or x = W and the antenna position approaches the edge of the placing area A1, the reader/writer controller 203 decreases the antenna output to reduce the communication range F1. As a result, an amount by which the communication range F1 is located outside the placing area A1 is reduced, and thus it can reduce the occurrence of misreading.

The reader/writer controller 203 may continuously reduce the antenna output from the center (x = C) to the edge of the placing area A1, or may reduce the antenna output stepwise. The amount of change in the antenna output from the center to the edge of the placing area A1 is preferably decided based on the amount of movement of the antenna 21 (moving base 225) from the center to the edge of the placing area A1. For example, it is assumed that a diameter of the communication range F1 in a state in which the antenna position is at the center (x = C) of the placing area A1 is 75 cm, and the amount of movement of the antenna 21 from the position of x = C to the position of x = 0 or x = W is 8 cm. In this case, the reader/writer controller 203 sets the antenna output to achieve that the diameter of the communication range F1 at the position of x = 0 or x = W becomes approximately 59 cm. As a result, since the communication range F1 can be included in the placing area A1, it can further reduce the occurrence of misreading.

Returning again to Fig. 4, the communication controller 204 controls the communication I/F 26 to perform transmission/reception of various information to and from the POS terminal 10 via the communication I/F 26. For example, the communication controller 204 receives instruction information for instructing the start of reading transmitted from the POS terminal 10. The communication controller 204 transmits the tag information read by the reader/writer controller 203 from the RFID tag T1 to the POS terminal 10. The communication controller 204 receives the instruction information for instructing the termination of reading transmitted from the POS terminal 10.

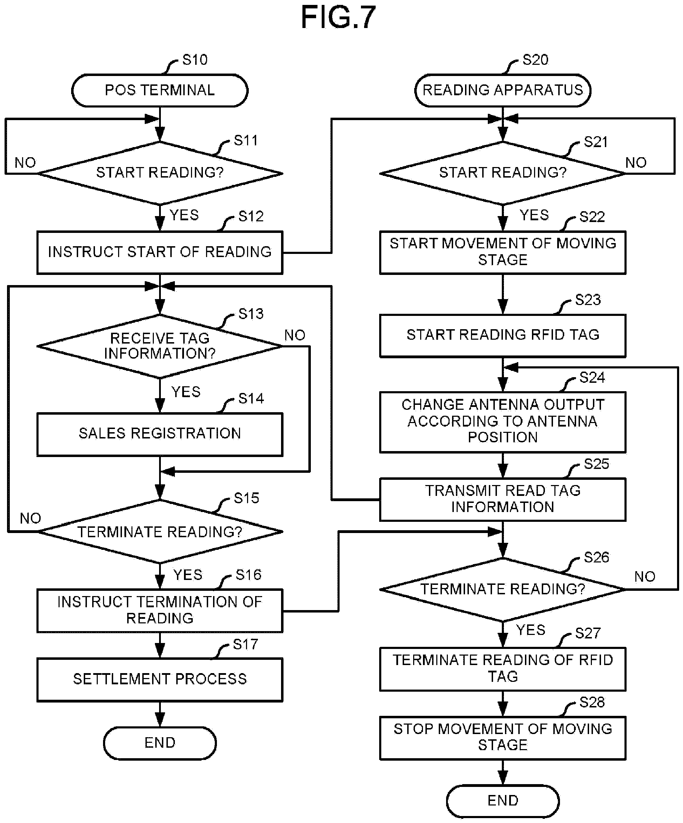

The operations by the POS terminal 10 and the reading apparatus 20 are described below with reference to Fig. 7. Fig. 7 is a flowchart depicting an example of the commodity sales data processing executed by the POS terminal 10 and the reading apparatus 20.

First, the communication controller 104 of the POS terminal 10 bases by until an operation for starting a reading is received (No in Act S11). Upon receiving the reading start operation (Yes in Act S11), the communication controller 104 of the POS terminal 10 transmits a reading start instruction to the reading apparatus 20 (Act S12).

In the reading apparatus 20, the communication controller 204 waits for the instruction for starting the reading (No in Act S21). If the communication controller 204 receives the instruction for starting the reading (Yes in Act S21), a processing in Act S22 is executed.

In response to the instruction for starting the reading, the antenna movement controller 201 starts moving the moving base 225 (Act S22). The reader/writer controller 203 starts reading the RFID tag T1 attached to the commodity M1 by operating the antenna 21 (Act S23). In response to the antenna position detected by the antenna position detection section 202, the reader/writer controller 203 reads the RFID tag T1 while changing the antenna output of the antenna 21 (Act S24). The communication controller 204 transmits the tag information read in Act S24 to the POS terminal 10 (Act S25).

The communication controller 204 determines whether or not the instruction for terminating the reading is received from the POS terminal 10 (Act S26). If it is determined that the reading termination instruction is not received (No in Act S26), the communication controller 204 returns to the processing in Act S24.

In the POS terminal 10, whether the communication controller 104 receives the tag information from the reading apparatus 20 is determined. If the tag information is not received (No in Act S13), the processing in Act S15 is executed. On the other hand, if the communication controller 104 receives the tag information (Yes in Act S13), the sales registration section 102 performs the sales registration of the commodity M1 based on the commodity code included in the tag information (Act S14), and then the processing in Act S15 is executed.

Subsequently, the communication controller 104 of the POS terminal 10 determines whether or not an operation for terminating the reading is received via the keyboard 13 (Act S15). If the operation for terminating the reading is not received (No in Act S15), the communication controller 104 returns to the processing in Act S13 to continue the sales registration on the commodity M1.

If the communication controller 104 of the POS terminal 10 receives the operation to terminate reading (Yes in Act S15), the communication controller 104 transmits the instruction to terminate the reading to the reading apparatus 20 (Act S16). Then, the settlement processing section 103 of the POS terminal 10 executes the settlement processing on the commodity M1 based on the data of the commodity M1 on which the sales registration is performed (Act S17).

On the other hand, in the reading apparatus 20, if the communication controller 204 receives the instruction to terminate the reading (Yes in Act S26), the reader/writer controller 203 stops the operation of the antenna 21 to terminate the reading of the RFID tag T1 (Act S27). Next, the antenna movement controller 201 returns the moving base 225 back to the reference position and stops the movement of the moving base 225 (Act S28).

As described above, at the time of reading the RFID tag attached to the commodity M1 placed in the placing area A1, the reading apparatus 20 moves the antenna 21 provided below the placing area A1 within the placing area A1. The reading apparatus 20 also detects the antenna position of the antenna 21 in the placing area A1 and changes the antenna output of the reading apparatus 20 according to the antenna position.

As a result, the reading apparatus 20 can read the RFID tag attached to the commodity M1 placed in the placing area A1 at different antenna positions within the placing area A1, and thus the RFID tag T1 can be read efficiently. Since the reading apparatus 20 can change the size of the communication range F1 formed by the antenna 21 in response to the antenna position, it can control an area of the communication range F1 extending over the outside of the placing area A1. Therefore, the reading apparatus 20 can reduce occurrence of misreading that the RFID tag T1 attached to the commodity located outside of the placing area A1 is erroneously read, and the RFID tag T1 attached to the commodity M1 placed in the placing area A1 can be read efficiently.

A modification of certain embodiments is described below.

### (Modification)

In the above embodiment, the antenna 21 is moved in the uniaxial direction parallel to the upper surface of the top board C11. In the present modification, the antenna 21 is moved in biaxial directions (X and Y axes) parallel to the upper surface of the top board C11.

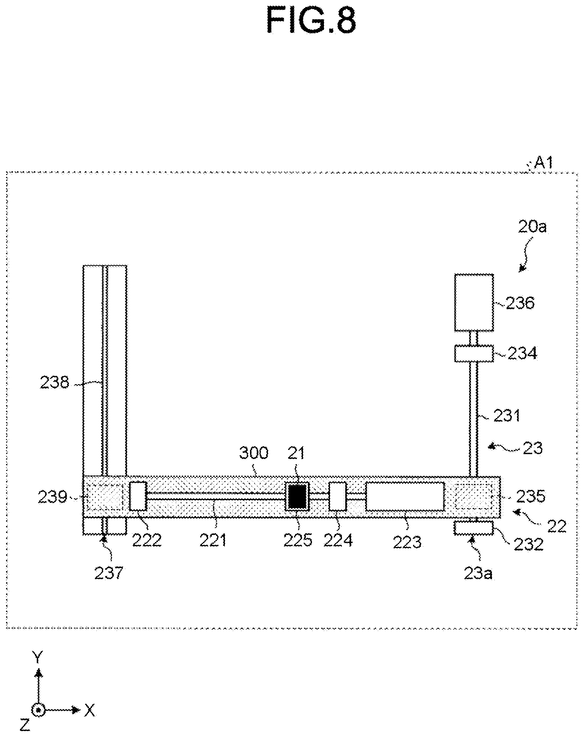

Fig. 8 is a plan view illustrating a schematic arrangement of a reading apparatus 20a according to the modification of the embodiment. In the reading apparatus 20a, a moving mechanism 23 for moving the antenna 21 further in a Y-axis direction is newly provided in addition to the moving mechanism 22 for moving the antenna 21 in the uniaxial, i.e., X-axis, direction described with reference to Fig. 2.

The moving mechanism 22 for X-axis is housed in a casing 300 formed in a rectangular parallelepiped shape, and the casing 300 is provided to the upper part of the moving mechanism 23 for Y-axis to horizontally move in the Y-axis direction. The bearing 222, the stepping motor 223, and the coupling 224 housed in the casing 300 are horizontally supported by the bottom surface of the casing 300.

The moving mechanism 23 for Y-axis is made up by a ball screw mechanism 23a including a screw shaft 231, and a stepping motor 236, and a guide rail 237. The ball screw mechanism 23a has basically the same configuration as the moving mechanism 22 for X axis. For example, the ball screw mechanism 23a includes a linear motion mechanism composed of such as the screw shaft 231, a bearing 232 of the screw shaft 231, the stepping motor 236 acting as a rotational power source, a coupling 234 for transmitting the rotational power to the screw shaft 231, and a moving base 235 integrally formed with a ball screw nut engaged with the screw shaft 231.

The guide rail 237 is provided at a distance from the ball screw mechanism 23a in parallel with the screw shaft 231. The distance between the ball screw mechanism 23a and the guide rail 237 is set to about a length of the moving mechanism 22 for X-axis.

The guide rail 237 supports the moving mechanism 22 for X-axis together with the ball screw mechanism 23a at respective ends of the moving mechanism 22. The height of the main body of the guide rail 237 is set to a height at which the moving mechanism 22 for X-axis is horizontally supported and a length thereof is set to a length at which the moving distance of the moving base 235 of the ball screw mechanism 23a is not restricted. A groove 238 having a constant width in a longitudinal direction is provided on the upper surface of the main body. A convex member 239 acting as a sliding pair with respect to the groove 238 and the upper surface of the main body is fitted into the groove 238 at the convex side, and the upper surface of the convex member 239 is fixed to one of the ends of the bottom surface of the moving mechanism 22 for X-axis.

The upper surface of the moving base 235 provided on the ball screw mechanism 23a is fixed to the other end of the bottom surface of the moving mechanism 22 for X-axis.

With such an arrangement, the moving mechanism 22 for X-axis is supported by the ball screw mechanism 23a and the guide rail 237 at respective ends thereof such that the moving mechanism 22 for X-axis can keep a horizontal state at the top of the moving mechanism 23 for Y-axis.

If the moving base 235 is moved under the control of the antenna movement controller 201, the moving mechanism 23 for X-axis moves horizontally in the Y-axis direction integrally with the moving base 235 while maintaining its posture. At this time, the convex member 239 moves along the groove 238 of the guide rail 237. Furthermore, if the moving base 225 of the moving mechanism 22 for X-axis is moved, the antenna 21 on the moving base 225 moves within an X-Y plane while facing the reading surface thereof upward.

With the above arrangement, it can move the antenna 21 in the placing area A1 along two axial directions parallel to the upper surface of the top board C11. The antenna movement controller 201 controls the movement of the moving base 225 on which the antenna 2 is mounted in the placing area A1 by operating the moving mechanism 22 and the moving mechanism 23 in cooperation with the motor driver 28. The reader/writer controller 203 controls the antenna output from the antenna 21 in response to the antenna position detected by the antenna position detection section 202 like the above embodiment. In the case of adopting this modification, the sensor section 29 may be respectively provided on movement paths of the moving base 225 and the moving base 235 to sense the antenna position in the placing area A1.

In the above embodiment, the POS terminal 10 and the reading apparatus 20 are separated from each other, but they may be an integrated device (commodity sales data processing apparatus) . In this case, one of the controllers provided in the commodity sales data processing apparatus may realize the functions of the display controller 101, the sales registration section 102, the settlement processing section 103, the antenna movement controller 201, the antenna position detection section 202 and the reader/writer controller 203.

The programs executed by each device of the foregoing embodiment may be incorporated into a storage medium (ROM or the like) of each device to be provided; however, the present invention is not limited to this. The programs may be recorded in a computer-readable recording medium such as a CD-ROM, a FD (Flexible Disk), a CD-R, a DVD (Digital Versatile Disk) and the like in the form of installable or executable file to be provided. Further, the storage medium is not limited to a medium independent of a computer or an embedded system, and also contains a storage medium that stores or temporarily stores the programs by downloading the programs transmitted through a LAN or an Internet.

Further, the programs executed by each device of the foregoing embodiment are stored in a computer connected with a network such as the Internet and downloaded via the network to be provided or may be provided or distributed via the network such as the Internet.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A reading apparatus, comprising:
an antenna configured to radiate radio waves capable of communicating with an RFID tag attached to a commodity placed in a placing area on a placing surface, the antenna positioned under the placing surface on which the placing area is formed;
a mover configured to move the antenna within the placing area in parallel with the placing surface;
a detector configured to detect a position of the antenna within the placing area;
a controller configured to
change an output of the antenna according to the position of the antenna detected by the detector; and
read information from the RFID tag via the antenna.

2. The reading apparatus according to claim 1, wherein the controller is configured to decrease an output of the antenna as the antenna approaches a periphery of the placing area.

3. The reading apparatus according to claim 1 or 2, wherein the controller is configured to change the output of the antenna so that a communication range of radio waves radiated from the antenna falls within the placing area.

4. The reading apparatus according to any of claims 1 to 3, wherein the mover is configured to adjust a position of the antenna in a uniaxial direction parallel to the placing surface.

5. The reading apparatus according to any of claims 1 to 4, wherein the mover is configured to move the antenna in biaxial directions parallel to the placing surface.

6. The reading apparatus according to any of claims 1 to 5, wherein the controller is configured to change the output of the antenna so that at least part of a communication range of radio waves radiated from the antenna falls outside the placing area.

7. The reading apparatus according to claim 6, wherein the controller is configured to change the output of the antenna so that a majority of a communication range of radio waves radiated from the antenna falls outside the placing area.

8. A method for reading information from an RFID tag attached to a commodity placed in a placing area by a reader having an antenna, the antenna being provided under a placing surface on which the placing area is formed and configured to radiate radio waves capable of communicating with the RFID tag, including:
moving the antenna within the placing area;
detecting a position of the antenna;
changing an output of the antenna according to the detected position of the antenna; and
reading information from the RFID tag via the antenna.

9. The method of claim 8, further comprising decreasing the output of the antenna as the antenna approaches a periphery of the placing area.

10. The method of claim 8 or 9, further comprising changing the output of the antenna so that a communication range of radio waves radiated from the antenna falls within the placing area.

11. The method of any of claims 8 to 10, further comprising adjusting a position of the antenna in a uniaxial direction parallel to the placing surface.

12. The method of any of claims 8 to 11, further comprising moving the antenna in biaxial directions parallel to the placing surface.

13. The method of any of claims 8 to 12, further comprising changing the output of the antenna so that at least part of a communication range of radio waves radiated from the antenna falls outside the placing area.

14. The method of claim 13, further comprising changing the output of the antenna so that a majority of a communication range of radio waves radiated from the antenna falls outside the placing area.
